# EUROPÄISCHE PATENTSCHRIFT

(11) **EP 1 353 105 B1**
(45) Veröffentlichungstag und Bekanntmachung des Hinweises auf die Patenterteilung: **04.10.2006**
(21) Anmeldenummer: 03001808.9
(22) Anmeldetag: 29.01.2003
(51) Int. Cl.: F16L 3/10, H02G 3/32

(54) **Kabeldurchführungsleiste**
Cable retainer clip
Attache de fixation pour câbles

(30) Priorität: 28.03.2002 DE 10214300
(43) Veröffentlichungstag der Anmeldung: 15.10.2003
(73) Patentinhaber: Murrplastik System-Technik GmbH, 71570 Oppenweiler (DE)
(72) Erfinder: Scharf-Martini, Lutz, 73614 Schorndorf (DE); Sohn, Wolfgang, 73734 Esslingen (DE); Funk, Rainer, 71543 Wüstenrot (DE)
(74) Vertreter: Jeck, Anton

(56) Entgegenhaltungen:
- WO-A1-98/05108
- WO-A1-03/088443
- DE-A- 19 840 136
- DE-A- 19 921 619
- DE-A- 19 940 338
- DE-A1- 3 428 258
- DE-U1- 8 806 765
- US-A- 4 641 988
- US-A- 4 886 326
- US-A- 5 494 245

## Beschreibung

Die Erfindung betrifft eine Kabeldurchführungsleiste gemäß dem Oberbegriff des Anspruchs 1 bzw. des Anspruchs 6.

Derartige Kabeldurchführungsleisten sind allgemein bekannt. Eine Ausführung einer solchen bekannten Kabeldurchführungsleiste weist zwei Leistenhälften auf, die im offenen Zustand ohne Verbindung miteinander sind und mittels zwei oder drei Schrauben fest miteinander verbunden werden können. Eine weitere bekannte Ausführung einer Kabeldurchführungsleiste weist zwei Leistenhälften auf, die bei der Montage durch Zapfen zueinander positioniert werden können, wobei diese Zapfen mit Nasen versehen sein können, um die beiden Leistenhälften unverlierbar aneinader binden zu können.

Die genannten zwei oder drei Schrauben müssen zur Herstellung des offenen Zustands der Kabeldurchführungsleiste gelöst und zur Herstellung des geschlos senen Zustands wieder zusammengeschraubt werden. Dies bedeutet einen erheblichen Zeitaufwand. Im offenen Zustand der Kabeldurchführungsleiste sind die Schrauben in der Regel verlierbar. Bei der Montage ist nicht erkennbar, wann der Dichtzustand erreicht ist, es sei denn, ein Einschraubmoment ist vorgegeben, was aber voraussetzt, dass bei der Montage ein Drehmomentschlüssel verwendet wird. Da diese Schrauben von der Schmalseite der beiden Leistenhälften eingreifen, ist die Fixierlage der Schrauben ungünstig, weil in unmittelbarer Nähe die Wand liegt, an der die Kabeldurchführungsleiste einzubauen ist.

Falls die beiden Leistenhäften mit Haltenasen aufweisenden Zapfen versehen sind, ist das durch die Leistenhälften in deren offenem Zustand gebildete Montagefenster für Kabel und Stecker sehr klein, und diese müssen mühsam durch dieses kleine Montagefenster durchgefädelt werden.

Aus DE 34 28 258 A ist eine Kabeldurchführungsleiste bekannt, bestehend aus zwei Leistenteilen für eine Kabeldurchführung, die als komplementäre Ausnehmungen in den beiden Leistenteilen zur Aufnahme des Kabels oder einer Kabeltülle gebildet ist, wobei im Bereich des einen Längsendes der Leistenteile ein Scharnier und im Bereich der anderen Längsenden der Leistenteile eine Verriegelungsvorrichtung angebracht ist. Die Verriegelungsvorrichtung besteht aus an den Leistenteilen angeordneten Vorsprüngen mit bei geschlossener Kabeldurchführungsleiste koaxial angeordneten Bohrungen, durch die ein Sicherungsstift von der Leistenvorderseite aus hindurchsteckbar ist. Nachteilig hieran ist, dass der Sicherungsstift verlierbar ist.

Aus DE 88 06 765 U1 ist eine Kabelanschlussvorrichtung bekannt, bestehend aus zwei Leistenteilen für eine Kabelzugentlastung, die als komplementäre Ausnehmungen in den beiden Leistenteilen zur Aufnahme des Kabels oder einer Kabeltülle gebildet ist, wobei im Bereich des einen Längsendes der Leistenteile ein Scharnier und im Bereich der anderen Längsenden der Leistenteile eine Verriegelungsvorrichtung angebracht ist. In der Kabelanschlussvorrichtung ist ein Anschlussblock zum elektrischen Anschluss des Kabels vorgesehen. Die Verriegelungsvorrichtung besteht aus einem Schnapphaken an dem einen Leistenteil und einem Rastvorsprung am anderen Leistenteil. Die Kabelanschlussvorrichtung ist nach dem Einrasten der Verschlussvorrichtung nicht mehr zu öffnen, da der Schnapphaken von außen nicht zugänglich ist.

Aus WO 98/05108 A ist eine Kabeldurchführungsleiste bekannt, bestehend aus zwei Leistenteilen für eine Kabeldurchführung, die als komplementäre Ausnehmungen in den beiden Leistenteilen zur Aufnahme des Kabels oder einer Kabeltülle gebildet ist, wobei im Bereich des einen Längsendes der Leistenteile ein Scharnier und im Bereich der anderen Längsenden der Leistenteile eine Verriegelungsvorrichtung angebracht ist. Als Verriegelungsvorrichtung sind zum Einen an den einander zugewandten Schmalseiten der Leistenteile angeordnete Schnapphaken und Rastvorsprünge vorgesehen. Nachteilig hieran ist wiederum, dass die Kabeldurchführungsleiste nach dem Einrasten der Verschlussvorrichtung nicht mehr zu öffnen ist, da die Schnapphaken nicht von außen zugänglich sind.

Aus US 4,886,326 ist eine Verbindungsvorrichtung für Möbel bekannt, umfassend einen in einem Möbelteil anordbaren Stift mit darauf angeordnetem Teller, sowie einen in einem in einem anderen Möbelteil angeordneten Sackloch anordbaren Drehkörper, welcher einen sich über einen Teil des Umfangs erstreckenden Schlitz mit durchgängiger Hintergreifung aufweist, welcher an einem Ende eine Ausnehmung aufweist, deren Durchmesser im Wesentlichen dem Durchmesser des Tellers entspricht. Das Sackloch weist eine radial in das Sackloch mündende Querbohrung auf. Der Drehkörper wird in das Sackloch gesteckt, wobei die Ausnehmung am Ende des Schützes des Drehkörpers deckungsgleich mit der Mündung der Querbohrung in das Sackloch ausgerichtet wird. Der Stift wird mit dem Teller voraus in eine in das Sackloch reichende Querbohrung bis in den Drehkörper hinein gesteckt. Durch Drehen des Drehkörpers werden die beiden Möbelteile miteinander verriegelt. Nachteilig hieran ist der komplizierte mehrteilige Aufbau, welcher die Gefahr des Verlierens einzelner Teile der Verriegelungsvorrichtung birgt.

Aus US 4,641,988 ist eine andere Verriegelungsvorrichtung für Möbel bekannt, wobei anstelle eines Stifts eine dünnwandige Profilplatte an dem einen Möbelteil angeordnet ist, und die Drehachse des Drehkörpers normal zur von der Platte gebildeten Ebene angeordnet sein muss. Auch hierbei besteht die Gefahr eines Verlierens des in ein Sackloch einzuführenden Drehkörpers.

Die Aufgabe der Erfindung besteht darin, eine Kabeldurchführungsleiste der im Oberbegriff des Anspruchs bzw. 6 genannten Art zu schaffen, bei der die Leistenteile und die Befestigungsmittel unverlierbar sind, das Öffnen und Schließen der Leistenteile schnell erfolgen kann und im geöffneten Zustand der beiden Leistenteile ein großes Montagefenster zur Verfügung steht.

Diese Aufgabe wird mit den Merkmalen des Anspruchs 1 bzw. 6 gelöst.

Damit ist die Kabeldurchführungsleiste eine einteilige, unverlierbare Einheit, die im geöffeneten Zustand einen maximalen Montageplatz freigibt. Beim Schließen der Kabeldurchführungsleiste positionieren sich die beiden Leistenteile selb-ständig zueinander, und die Verriegelung kann auf einfache Weise, vorzugsweise von der Vorderseite des Kabeldurchführungsleiste aus, erfolgen. Die Verriegelungsposition kann mit definiertem Anpressdruck eindeutig stattfinden.

Die Verriegelungsvorrichtung ist durch eine aus dem einen Leistenteil ragende Nase mit mindestens einem senkrecht zur Nase stehenden Rastnocken und durch einen im anderen Leistenteil drehbar angeordneten Drehkörper gebildet, der mindestens einen hakenförmigen Teil zum Hintergreifen des Rastnockens aufweist und von der Leistenvorderseite aus betätigbar ist. Daher kann die Verriegelung mit einem einfachen Handgriff in günstiger Betätigungslage schnell erfolgen und der Schließdruck definiert werden. Vorzugsweise ist die Nase integrierter Bestandteil des zugeordneten Leistenteils.

Gemäß einer weiteren Ausbildung der Erfindung ist der Drehkörper auf seiner vorderen Stirnseite mit einem Betätigungsschlitz versehen. Daher genügt ein Schraubenzieher zum Öffnen und Schließen der Kabeldurchführungsleiste.

Gemäß einer weiteren Ausbildung der Erfindung weisen die vordere Stirnseite des Drehkörpers und die Vorderseite des den Drehkörper aufweisenden Leistenteils Markierungen zur Kennzeichnung des Schließ- und Offenzustands der Verriegelungsvorrichtung auf. Daher sind diese Zustände von außen deutlich zu erkennen.

Gemäß einer weiteren Ausbildung der Erfindung ist das Scharnier ein Filmscharnier. Dieses einfache und billige Filmscharnier kann deshalb günstig eingesetzt werden, weil die Häufigkeit seines Öffnens und Schließens nicht sehr groß ist.

Gemäß einer weiteren Ausbildung der Erfindung ist die Verriegelungsvorrichtung durch einen an dem einen Leistungsteil angebrachten, von außen zugänglichen Schnapphaken und durch einen Rastvorsprung am anderen Leistenteil gebildet. Ein Fenster ist auf der Vorderseite des den Vorsprung aufweisenden Leistenteils vorgesehen, durch das beispielsweise ein Schraubenzieher zur Entriegelung des Schnapphakens gesteckt werden kann. Vorzugsweise ist dieser Schnapphaken ein integrierter Bestandteil des zugeordneten Leistenteils, so dass bei Ausführung in Kunststoff ein einfaches Spritzteil vorliegt.

Gemäß einer zusätzlichen Ausgestaltung der Erfindung ist auch hierbei denkbar, dass das Scharnier ein Filmschamier ist.

Die Erfindung wird nun anhand eines Ausführungsbeispiels näher erläutert. Es zeigen:
- Fig. 1: eine perspektivische Darstellung einer Kabeldurchführungsleiste gemäß der Erfindung im geöffnetem Zustand dieser Leiste und
- Fig. 2: eine Vorderansicht der Kabeldurchführungsleiste der Fig. 1 im Schließzustand.

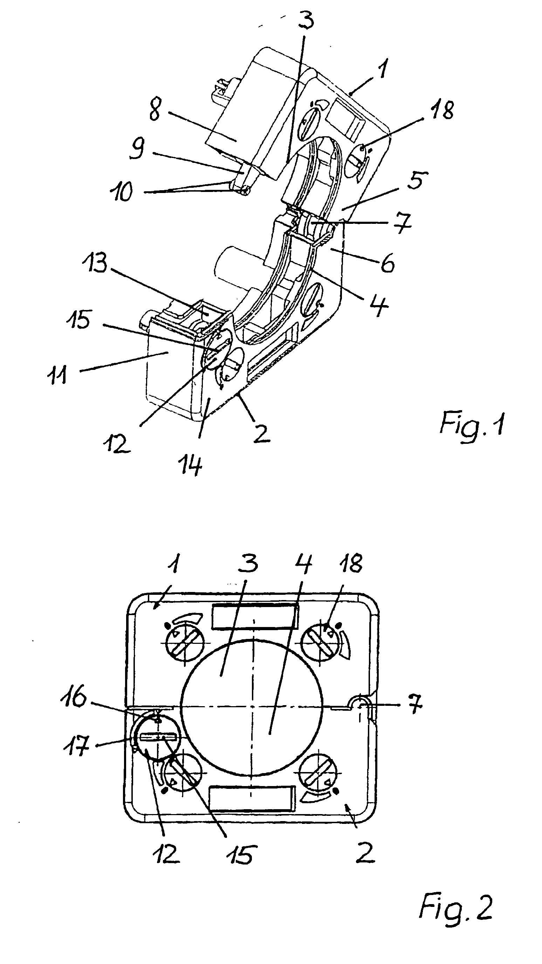

In den Figuren 1 und 2 ist eine vorzugsweise aus Kunststoff bestehende Kabeldurchführungsleiste aus zwei Leistenteilen 1 und 2 dargestellt, die jeweils im Wesentlichen gleich ausgebildet sind. Jedes Leistenteil 1, 2 ist doppelwandig und damit kastenförmig ausgebildet und ist mit komplementären Ausnehmungen 3, 4 versehen, die zur Durchführung eines Kabels oder zum Einlegen einer ein Kabel umgebenden Kabeltülle dient. Im Bereich der einen Längsenden 5, 6 der Leistenteile 1, 2 ist ein Scharnier 7 angeordnet, das erlaubt, den oberen Leistenteil 1 etwa senkrecht zum unteren Leistenteil 2 aufzuklappen. Daher lassen sich Kabel oder Kabeltülle mit Kabel ungehindert und schnell in die Ausnehmung 4 einlegen.

Im Bereich des anderen Längsendes 8 des Leistenteils 1 ist eine nach unten ragende Nase 9 angeformt, die am Ende mit zwei senrecht zur Nase stehenden Rastnocken 10 versehen ist.

Im Bereich des anderen Längsendes 11 des Leistenteils 2 ist ein Drehkörper 12 drehbar angeordnet, der über einer nach oben offenen Öffnung 13 des Leistenteils 2 zugänglich ist. Der Drehkörper ist mit zwei in Fig. 1 nicht erkennbaren, hakenförmigen Teilen versehen, die zum Hintergreifen der Rastnocken 10 bei entsprechender Drehung des Drehkörpers 12 dienen. Der Drehkörper 12 ist von der Vorderseite 14 des Leistenteils 2 zugänglich und ist dort mit einem Schlitz 15 versehen. Ferner trägt die der Vorderseite 14 entsprechende Stirnseite des Drehkörpers eine Pfeilkopfmarkierung 16 und die Vorderseite 14 eine Balkenmarkierung 17 in Form eines um den Drehkörper 12 geführten Viertelkreisbogens.

Ferner weisen die Leistenteile 1, 2 jeweils zwei weitere Drehkörper, wie den Drehkörper 18, auf, die zur Befestigung der Kabeldurchführungsleiste 1, 2 in einem Ausschnitt einer Wand, beispielsweise einer Schaltschrankwand, dienen, aber nicht Gegenstand der vorliegenden Erfindung sind.

In Fig. 2 ist die Kabeldurchführungsleiste im geschlossenen Zustand gezeigt. Die Nase 9 steckt dabei in der Öffnung 13, und die nicht erkennbaren, hakenförmigen Teile des Drehkörpers 12 hintergreifen die Rastnocken 10 mit einem de finierten Schließdruck bis zu einem Anschlag dieser Teile. Der Drehkörper 12 ist dabei mittels eines in den Schlitz gesteckten Schraubenziehers aus seiner Offenstellung, in der die Pfeilkopfmarkierung 16 nach links zeigt, in die Schließstellung gedreht worden, in der die Pfeilkopfmarkierung 16 nach oben zeigt.

## Patentansprüche

1. Kabeldurchführungsleiste aus zwei oder mehreren Leistenteilen (1, 2) für mindestens eine Kabeldurchführung, die als komplementäre Ausnehmungen (3, 4) in mindestens einem Leistenteil (1, 2) zur Aufnahme des Kabels oder einer Kabeltülle gebildet ist, wobei eine im Bereich der einen Längsenden (5, 6) der Leistenteile (1, 2) angebrachtes Scharnier (7) und eine im Bereich der anderen Längsenden (8, 11) der Leistenteile (1, 2) angebrachte, von der Leistenvorderseite (14) aus betätigbare Verriegelungsvorrichtung (9, 12) umfassende Befestigungsmittel zur Befestigung der beiden Leistenteile (1, 2) aneinander vorgesehen sind, **dadurch gekennzeichnet,**
**dass** die Verriegelungsvorrichtung durch eine aus dem einen Leistenteil (1) ragende Nase (9) mit mindestens einem senkrecht zur Nase (9) stehenden Rastnocken (10) und durch einen im anderen Leistenteil (2) drehbar angeordneten Drehkörper (12) gebildet ist, der mindestens einen hakenförmigen Teil zum Hintergreifen des Rastnockens (10) aufweist.

2. Kabeldurchführungsleiste nach Anspruch 1, **dadurch gekennzeichnet,**
**dass** das Scharnier ein Filmscharnier ist.

3. Kabeldurchführungsleiste nach Anspruch 1 oder 2, **dadurch gekennzeichnet,**
**dass** die Nase (9) integrierter Bestandteil des zugeordneten Leistenteils (1) ist.

4. Kabeldurchführungsleiste nach Anspruch 1, 2 oder 3, **dadurch gekennzeichnet,**
**dass** der Drehkörper (12) auf seiner vorderen Stirnseite mit einem Betätigungsschlitz (15) versehen ist.

5. Kabeldurchführungsleiste nach einem der Ansprüche 1 bis 4, **dadurch gekennzeichnet,**
**dass** die vordere Stirnseite des Drehkörpers (12) und die Vorderseite des den Drehkörper (12) aufweisenden Leistenteils (2) Markierungen (16, 17) zur Kennzeichnung der Schließ- und Offenstellung der Verriegelungsvorrichtung aufweisen.

6. Kabeldurchführungsleiste aus zwei oder mehreren Leistenteilen (1, 2) für mindestens eine Kabeldurchführung, die als komplementäre Ausnehmungen (3, 4) in mindestens einem Leistenteil (1, 2) zur Aufnahme des Kabels oder einer Kabeltülle gebildet ist, wobei eine im Bereich der einen Längsenden (5, 6) der Leistenteile (1, 2) angebrachtes Scharnier (7) und eine im Bereich der anderen Längsenden (8, 11) der Leistenteile (1, 2) angebrachte, von der Leistenvorderseite (14) aus betätigbare Verriegelungsvorrichtung umfassende Befestigungsmittel zur Befestigung der beiden Leistenteile (1, 2) aneinander vorgesehen sind, **dadurch gekennzeichnet,**
**dass** die Verriegelungsvorrichtung durch einen an dem einen Leistenteil (1) angebrauchten, durch ein an der Leistenvorderseite des anderen Leistenteils (2) angeordnetes Fenster von außen zugänglichen Schnapphaken und durch einen Rastvorsprung am anderen Leistenteil (2) gebildet ist.

7. Kabeldurchführungsleiste nach Anspruch 6, **dadurch gekennzeichnet,**
**dass** der Schnapphaken integrierter Bestandteil des zugeordneten Leistenteils ist.

8. Kabeldurchführungsleiste nach einem der Ansprüche 6 oder 7, **dadurch gekennzeichnet,**
**dass** das Scharnier ein Filmscharnier ist.

## Claims

1. Cable lead-through strip made of two or more strip parts (1, 2) for at least one cable lead-through, which is formed as complementary recesses (3, 4) in at least one strip part (1, 2) for receiving the cable or a cable bush, attachment means, comprising a hinge (7), which is fitted in the region of one of the longitudinal ends (5, 6) of the strip parts (1, 2), and a locking device (9, 12) which is fitted in the region of the other longitudinal ends (8, 11) of the strip parts (1, 2) and is actuatable from the strip front side (14), being provided for attaching the two strip parts (1, 2) to each other, **characterised in that**
the locking device is formed by a nose (9), which projects from the one strip part (1) and has at least one catching toe (10) which is at right angles to the nose (9), and by a rotating body (12) which is rotatably disposed in the other strip part (2), said rotating body having at least one hook-shaped part for rear engagement of the catching toe (10).

2. Cable lead-through strip according to claim 1, **characterised in that** the hinge is a film hinge.

3. Cable lead-through strip according to claim 1 or 2, **characterised in that**
the nose (9) is an integrated component of the associated strip part (1).

4. Cable lead-through strip according to claim 1, 2 or 3,
**characterised in that**
the rotating body (12) is provided on its front end-side with an actuation slot (15).

5. Cable lead-through strip according to one of the claims 1 to 4,
**characterised in that**
the front end-side of the rotating body (12) and the front side of the strip part (2) which has the rotating body (12) have markings (16, 17) for distinguishing the closed and open position of the locking device.

6. Cable lead-through strip made of two or more strip parts (1, 2) for at least one cable lead-through, which is formed as complementary recesses (3, 4) in at least one strip part (1, 2) for receiving the cable or a cable bush, attachment means, comprising a hinge (7), which is fitted in the region of one of the longitudinal ends (5, 6) of the strip parts (1, 2), and a locking device which is fitted in the region of the other longitudinal ends (8, 11) of the strip parts (1, 2) and is actuatable from the strip front side (14), being provided for attaching the two strip parts (1, 2) to each other, **characterised in that**
the locking device is formed by a snapping hook, which is fitted to the one strip part (1) and is accessible from the outside through a window disposed on the strip front side of the other strip part (2), and by a catching projection on the other strip part (2).

7. Cable lead-through strip according to claim 6, **characterised in that** the snapping hook is an integrated component of the associated strip part.

8. Cable lead-through strip according to one of the claims 6 or 7,
**characterised in that**
the hinge is a film hinge.

## Revendications

1. Barrette de passage de câble constituée de deux parties de barrette (1, 2) ou davantage pour au moins un passage de câble, qui est réalisé sous forme d'évidements complémentaires (3, 4) dans au moins une partie de barrette (1, 2) pour recevoir le câble ou un passe-câble, des moyens de fixation pour fixer les deux parties de barrette (1, 2) l'une à l'autre étant prévus et constitués par une charnière (7) placée dans la zone des premières extrémités longitudinales (5, 6) des parties de barrette (1, 2), et d'un dispositif de verrouillage (9, 12) disposé dans la zone des autres extrémités longitudinales (8, 11) des parties de barrette (1, 2) et pouvant être actionné à partir du côté avant (14) de la barrette,
**caractérisée en ce que** le dispositif de verrouillage est formé par un tenon (9) qui fait saillie de ladite une partie de barrette (1) et comporte au moins un mentonnet d'encliquetage (10) en position perpendiculaire au tenon (9), et par un corps rotatif (12) qui est agencé de manière rotative dans l'autre partie de barrette (2), et présente au moins une partie en forme de crochet pour venir s'engager derrière le mentonnet d'encliquetage (10).

2. Barrette de passage de câble selon la revendication 1,
**caractérisée en ce que** la charnière est une charnière à film.

3. Barrette de passage de câble selon la revendication 1 ou 2,
**caractérisée en ce que** le talon (9) fait partie intégrante de la partie de barrette (1) associée.

4. Barrette de passage de câble selon la revendication 1, 2 ou 3,
**caractérisée en ce que** le corps rotatif (12) est pourvu sur son côté avant, d'une fente d'actionnement (15).

5. Barrette de passage de câble selon l'une des revendications 1 à 4,
**caractérisée en ce que** le côté frontal avant du corps rotatif (12) et le côté avant de la partie de barrette (2) présentant le corps rotatif (12), comportent des marquages (16, 17) pour
caractériser ou matérialiser la position de fermeture et la position d'ouverture du dispositif de verrouillage.

6. Barrette de passage de câble constituée de deux parties de barrette (1, 2) ou davantage pour au moins un passage de câble, qui est réalisé sous forme d'évidements complémentaires (3, 4) dans au moins une partie de barrette (1, 2) pour recevoir le câble ou un passe-câble, des moyens de fixation pour fixer les deux parties de barrette (1, 2) l'une à l'autre étant prévus et constitués par une charnière (7) placée dans la zone des premières extrémités longitudinales (5, 6) des parties de barrette (1, 2), et d'un dispositif de verrouillage disposé dans la zone des autres extrémités longitudinales (8, 11) des parties de barrette (1, 2) et pouvant être actionné à partir du côté avant (14) de la barrette,
**caractérisée en ce que** le dispositif de verrouillage est formé par un crochet d'enclenchement qui est placé sur ladite une partie de barrette (1) et est accessible de l'extérieur, à travers une fenêtre agencée sur le côté avant de barrette de l'autre partie de barrette (2), et par une protubérances d'encliquetage sur l'autre partie de barrette (2).

7. Barrette de passage de câble selon la revendication 6,
**caractérisée en ce que** le crochet d'enclenchement fait partie intégrante de la partie de barrette associée.

8. Barrette de passage de câble selon l'une des revendications 6 ou 7,
**caractérisée en ce que** la charnière est une charnière à film.
